# EUROPÄISCHE PATENTANMELDUNG

(11) **EP 1 676 701 A1**
(43) Veröffentlichungstag der Anmeldung: **05.07.2006**
(21) Anmeldenummer: 04031048.4
(22) Anmeldetag: 30.12.2004
(51) Int. Cl.: B41F 15/08

(54) **Rundtaktvorrichtung**

(71) Anmelder: MHM Siebdruckmaschinen GmbH KG, 6343 Erl (AT)
(72) Erfinder: Mayrhofer, Herbert, 6343 Erl (AT)
(74) Vertreter: Wunderlich, Rainer

(57) **Zusammenfassung**

Die Erfindung betrifft eine Rundtaktvorrichtung mit einem Drehtisch (10), welcher drehbar um eine Drehachse (12) gelagert ist. Ein Außenumfangsbereich (14) des Drehtisches ist zur Aufnahme von Werkzeugen, Aufnahmehalterungen oder sonstigen Maschineneinrichtungen ausgebildet. Zur Verbesserung der Positionier- und Wiederholgenauigkeit ist ein Radial- und Axiallager (20) beabstandet von der Drehachse (12) entlang des Außenumfangsbereichs unterhalb des Drehtisches (10) angeordnet.

## Beschreibung

Die Erfindung betrifft eine Rundtaktvorrichtung mit einem Drehtisch, welcher drehbar um eine Drehachse gelagert ist, wobei ein Außenumfangsbereich des Drehtisches zur Aufnahme von Werkzeugen, Aufnahmehalterungen und sonstigen Maschineneinrichtungen ausgebildet ist.

Derartige Rundtaktvorrichtungen werden beispielsweise bei sogenannten Karussell-Druckmaschinen eingesetzt. Die zu bedruckenden Materialien werden dabei auf Trägern angeordnet, die am Drehtisch befestigt sind. Ausgehend von einer Eingabestation wird das einzelne Druckgut an den Trägern mittels des Drehtisches zu einzelnen Druckstationen befördert, welche entlang des Umlaufweges der Träger angeordnet sind. Nach jedem Drehschritt befindet sich das Druckgut an einer neuen Druckstation, an welcher jeweils ein gewünschter Farbauftrag erfolgen kann.

Eine derartige maschinelle Karussell-Siebdruckmaschine ist beispielsweise aus der DE-A-196 22 230 bekannt. Dabei ist ein Drehteller an einer drehbaren Welle befestigt, welche gegenüber dem Maschinenbett drehbar gelagert ist. Entlang des Außenumfangs des Drehtischen sind radial vorstehende Arbeitsorgane angeordnet. Bei größeren Drehgeschwindigkeiten besteht die Gefahr von Schwingungen und damit eine nicht mehr exakte Positionierung der Arbeitsorgane. Dies kann dazu führen, dass die einzelnen Farbdrucke nicht exakt zueinander durchgeführt und somit das Druckbild qualitativ beeinträchtigt ist. Bei dieser bekannten Rundtaktvorrichtung sind zur Erhöhung der Festigkeit und damit der Steifigkeit des Drehtisches an dessen Unterseite eine Vielzahl von Versteifungsrippen angeordnet.

Gattungsgemäße Rundtaktvorrichtungen können nicht nur bei derartigen Karussell-Druckmaschinen, sondern auch bei anderen Bearbeitungs- und Fertigungsanlagen als eine Fördereinrichtung eingesetzt werden, bei welcher etwa ein Arbeitsgut taktweise durch Weiterdrehen zu ringförmig angeordneten Bearbeitungsstationen transportiert wird.

Der Erfindung liegt die **Aufgabe** zugrunde, eine Rundtaktvorrichtung, insbesondere für eine Druckmaschine, anzugeben, mit welcher ein zuverlässiger und positionsgenauer Drehbetrieb des Drehtisches erreicht wird.

Die Aufgabe wird durch eine Rundtaktvorrichtung mit den Merkmalen des Anspruchs 1 gelöst. Bevorzugte Ausführungsformen der Erfindung sind in den abhängigen Ansprüchen angegeben.

Die erfindungsgemäße Rundtaktvorrichtung ist dadurch gekennzeichnet, dass ein Radial- und Axiallager beabstandet von der Drehachse entlang des Außenumfangsbereichs unterhalb des Drehtisches angeordnet ist.

Ein Grundgedanke der Erfindung besteht darin, den Drehtisch nicht mehr an seiner radialen Innenseite nahe der Drehachse, sondern in seinem Außenbereich an der Unterseite zu lagern. Durch eine Lagerung entlang des Außenumfangs erfolgt eine erhebliche Versteifung des Drehtisches. Das Lager ist dabei als ein Radial- und Axiallager ausgebildet, so dass grundsätzlich nur ein einzelner Lagerring ausreicht. Die Anordnung eines solchen Lagers am Außenbereich erlaubt eine unmittelbare Kraftaufnahme des Gewichtes sowohl des Drehtisches als auch der darauf angebrachten Einrichtungen. Dies wirkt dem Entstehen hoher Biegemomente, beispielsweise durch radial auskragende Elemente, entgegen, was sich ebenfalls positiv auf das Schwingungsverhalten der Rundtaktvorrichtung auswirkt.

Insgesamt wird durch die Erfindung eine kompakte Rundtaktvorrichtung mit sehr hoher Festigkeit und Steifigkeit, insbesondere Schwingungssteifigkeit, erreicht, was hohe Positionier- und Wiederholgenauigkeiten bei hohen Arbeitsgeschwindigkeiten ermöglicht.

Eine bevorzugte Ausführungsform der Erfindung besteht darin, dass der Drehtisch ringförmig mit einer Mittendurchführung ausgebildet ist. Nachdem der Drehtisch unmittelbar am Außenbereich gelagert ist, kann zur weiteren Materialeinsparung der innere Bereich des Drehtisches entfallen. Dies führt zu einer Gewichtsreduzierung, was das Trägheitsmoment des Drehtisches vermindert und damit die Positioniergenauigkeit und die Drehbeschleunigung des Drehtisches weiter verbessert.

Eine besonders stabile Anordnung wird nach der Erfindung dadurch erreicht, dass das Radial- und Axiallager als ein Vierpunktlager ausgebildet ist. Es handelt sich insbesondere um ein Kugellager, welches sowohl Radial- als auch Axialkräfte zuverlässig aufnehmen kann. Vorzugsweise weist ein derartiges Vierpunktlager einen Außendurchmesser von zumindest 0,5 m, besonders bevorzugt 1 m und größer, auf.

Ein weiterer positiver Effekt auf die Steifigkeit ergibt sich nach der Erfindung dadurch, dass ein oberer Lagerring des Radial- und Axiallagers direkt oder über ein Zwischenelement an der Unterseite des Drehtisches und ein unterer Lagerring auf einem Grundelement befestigt ist, welches mit dem Maschinenbett verbunden ist. Durch die Befestigung des oberen Lagerrings unmittelbar an der Unterseite des Drehtisches oder mittels eines ringförmigen Adapterelementes wird die hohe Steifigkeit des Radial- und Axiallagers unmittelbar auf den Drehtisch übertragen. Durch diese erfindungsgemäße Anordnung können Axialkräfte unmittelbar vom Drehtisch auf das Maschinenbett übertragen werden, was sich stark schwingungsmindernd auswirkt.

Grundsätzlich kann der Drehtisch der Rundtaktvorrichtung auch manuell betrieben werden, was beispielsweise bei einfachen Karussell-Druckmaschinen sinnvoll sein kann. Für eine hohe Leistung ist es erfindungsgemäß zweckmäßig, dass der Drehtisch mittels eines Antriebes drehend antreibbar ist, welcher vorzugsweise als ein Direktantrieb ausgebildet ist. Der Antrieb kann also in bekannter Weise über ein Getriebe erfolgen, welches ein Zahnrad, Ketten- oder Riemengetriebe sein kann. Der Einsatz eines Direktantriebes verbessert die Steifigkeit und die Positioniergenauigkeit jedoch weiter.

Dabei ist es erfindungsgemäß, dass der Antrieb ein elektrischer Antrieb mit einem Rotor und einem Stator ist, und dass der Rotor an dem Drehantrieb und der Stator an dem Maschinenbett angeordnet ist. Dabei ist der Elektromotor sozusagen integriert in den bestehenden Maschinenkomponenten ausgebildet. Die wesentlichen Komponenten eines Elektromotors, der Stator und der Rotor, sind einerseits unmittelbar am Maschinenbett und andererseits unmittelbar mit dem Drehtisch gekoppelt. Hierdurch wird ein nachteiliges Getriebespiel vermieden. Weiter werden die drehend angetriebenen Massen reduziert, was sich ebenfalls positiv auf eine exakte Positionierung bei hohen Drehgeschwindigkeiten auswirkt.

Zudem ergibt sich so eine besonders kompakte Maschinenanordnung. Der Wegfall von wartungsintensiven Zahnrad- oder Riemengetrieben reduziert den Wartungsaufwand der erfindungsgemäßen Maschine und erhöht die Standzeit und damit die Wirtschaftlichkeit der Vorrichtung.

Grundsätzlich können verschiedenste Typen von Elektromotoren für die erfindungsgemäße Vorrichtung eingesetzt werden. Nach der Erfindung wird eine besonders gute Positioniergenauigkeit jedoch dadurch erreicht, dass der Antrieb als ein Servo-Motor ausgebildet ist.

Eine weitere bevorzugte Ausführungsform besteht darin, dass eine Steuerung vorgesehen ist, mit welcher der Drehtisch taktweise drehbar ist. Für jeden Takt ist ein bestimmter Drehwinkel vorgesehen, wobei der Antriebsmotor durch eine elektronische Steuerung entsprechend angesteuert wird. Grundsätzlich kann dabei eine zusätzliche Positionier- oder Justiereinrichtung am Drehtisch vorhanden sein, um gegebenenfalls den Antrieb nachzuregeln. Dabei kann zur Positionierung des Rotors eine Gebereinrichtung vorgesehen sein. Dies kann beispielsweise ein Maßband-Gebersystem sein, welches entlang des Rotors angeordnet ist. Hierdurch kann die Position des Rotors überwacht und gegebenenfalls durch Steuerung des Antriebsmotors nachgestellt werden.

Die erfindungsgemäße Rundtaktvorrichtung kann bei den verschiedensten Fertigungsanlagen und Maschinen eingesetzt werden. Besonders zweckmäßig ist nach der Erfindung eine Druckmaschine, insbesondere eine Siebdruckmaschine, welche mit der vorstehend beschriebenen Rundtaktvorichtung versehen ist. Gerade für hochqualitative Druckmaschinen kommt es trotz relativ hoher Arbeitsgeschwindigkeiten bei einem Mehrfarbendruck auf eine exakte Positionierung an, da ansonsten die einzelnen Farblagen nicht zur Schaffung eines sauberen Farbbildes übereinander aufgebracht werden können.

Eine vorteilhafte Ausführungsform einer erfindungsgemäßen Druckmaschine besteht darin, dass an dem Drehtisch sternförmig Paletten zum Halten eines Druckgutes angeordnet sind und dass ein Druckteller mit einer Vielzahl von Druckstationen am Maschinenbett angeordnet ist. Üblicherweise ist der Druckteller mit den sternförmig angeordneten Druckstationen oberhalb des taktweise angetriebenen Drehtisches angeordnet. Mittels einer Hubeinrichtung kann der Drehteller relativ zum Drehtisch axial verschiebbar in Richtung der Drehachse sein. Die Hubeinrichtung kann dabei üblicherweise ein oder mehrere Hydraulikzylinder aufweisen, welche den Druckteller gegenüber dem Maschinenbett anheben und absenken. Die Hubeinrichtung kann dabei innerhalb eines mittigen Maschinenschachtes angeordnet sein.

Die einzelnen Druckstationen des Drucktellers können je eine Siebdruckeinheit zum Drucken einer Farbe aufweisen. Die Siebdruckeinheit weist dabei ein Sieb auf, welches entsprechend dem zu erstellenden Druckmuster präpariert ist. Über ein Rakelsystem kann ein flüssiges Druckmedium durch das Sieb auf die zu bedruckende Oberfläche des Druckgutes aufgebracht werden. Derartige Druckmaschinen werden als Karussell-Siebdruckmaschinen bezeichnet.

Die Erfindung wird nachfolgend anhand eines bevorzugten Ausführungsbeispieles weiter erläutert, welches schematisch in den Zeichnungen dargestellt ist.

### In den Figuren zeigen:

- Fig. 1: eine teilgeschnittene Seitenansicht eines Drehtisches für eine erfindungsgemäße Rundtaktvorrichtung und
- Fig. 2: eine vergrößerte Detailansicht von Figur 1.

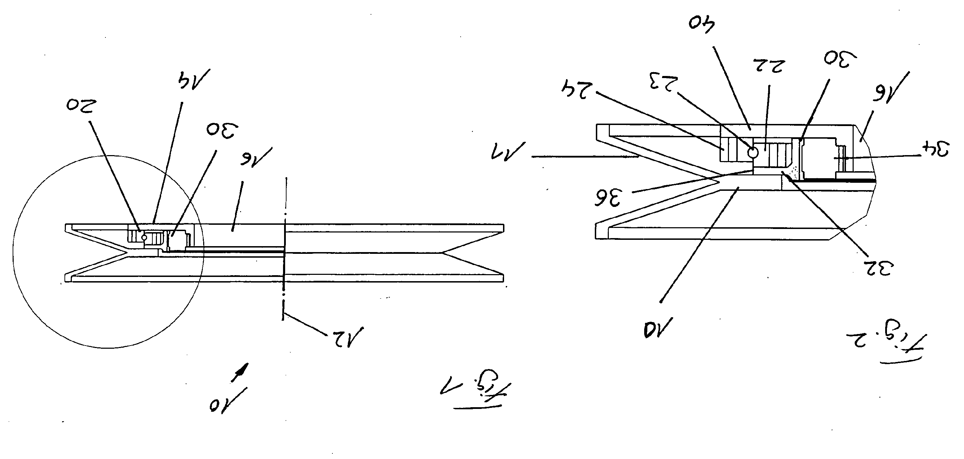

Gemäß Fig. 1 ist ein erfindungsgemäßer Drehtisch 10 ringförmig mit einer Mittendurchführung 16 versehen, welche zu einer Drehachse 12 zentrisch ausgebildet ist. Im Außenbereich des horizontalen Drehtisches 10 ist an dessen Unterseite ein Radial- und Axiallager 20 sowie ein als Direktantrieb ausgebildeter Antrieb 30 vorgesehen. Dieser Außenumfangsbereich des Drehtisches 10 wird nachfolgend näher in Zusammenhang mit Figur 2 erläutert.

Das Radial- und Axiallager 20 umfasst einen oberen Lagerring 22 und einen unteren Lagerring 23, welche in bekannter Weise Kugeln als Wälzkörper umschließen. Dieses Vierpunktlager kann sowohl radiale als auch axiale Kräfte aufnehmen, welche vom Drehtisch 10 auf ein mit dem Maschinenbett verbundenes Grundelement 40 übertragen werden. Hierzu ist der untere Lagerring 23 unmittelbar an dem plattenförmigen Grundelement 40 befestigt, während der obere Lagerring 22 fest mit einem radialen Abschnitt des Drehtisches 10 verbunden ist.

Der als Servo-Motor ausgeführte Antrieb 30 umfasst einen Stator 34, welcher ortsfest an dem Grundelement 40 angeordnet ist. Demgegenüber ist über das Radial- und Axiallager 20 ein Rotor 32 drehbar gelagert. Der ringförmige Rotor 32 weist einen axial gerichteten Flächenbereich auf, welcher durch seine elektromagnetische Ausgestaltung in grundsätzlich bekannter Weise durch die Bestromung des Stators 34 eine Drehbewegung des Drehtisches 10 gegenüber dem Grundelement 40 bewirkt. Weiter weist der Rotor 32 einen radial gerichteten Abschnitt auf, welcher zwischen einer Unterseite des Drehtisches 10 und einer Oberseite des oberen Lagers 22 angeordnet und drehfest damit verbunden ist.

An dem radial nach außen gerichteten Ende des Rotors 32 ist eine Aufnahmefläche 36 für ein Maßsystem vorgesehen. Dies ermöglicht eine Positionskontrolle sowie eine Nachstellung des Drehtisches 10 über eine Steuerung mit einer nicht dargestellten Positioniereinheit. Zur Aufnahme von Paletten an stangenförmigen Trägern ist am Außenumfang des Drehtisches 10 eine Aufnahmenut 11 ausgebildet. In diese können entsprechend keilförmig gestaltete Aufnahmebereiche der Stangenträger eingeführt und darin befestigt werden. Selbstverständlich kann die Aufnahme von weiteren Maschinenelementen auch in herkömmlicher Weise an der Oberseite des Drehtisches 10 erfolgen.

## Patentansprüche

1. Rundtaktvorrichtung mit einem Drehtisch (10), welcher drehbar um eine Drehachse (12) gelagert ist, wobei ein Außenumfangsbereich (14) des Drehtisches (10) zur Aufnahme von Werkzeugen, Aufnahmehalterungen oder sonstigen Maschineneinrichtungen ausgebildet ist,
**dadurch gekennzeichnet,**
**dass** ein Radial- und Axiallager (20) beabstandet von der Drehachse (12) entlang des Außenumfangsbereichs (14) unterhalb des Drehtisches (10) angeordnet ist.

2. Rundtaktvorrichtung nach Anspruch 1,
**dadurch gekennzeichnet,**
**dass** der Drehtisch (10) ringförmig mit einer Mittendurchführung (16) ausgebildet ist.

3. Rundtaktvorrichtung nach Anspruch 1 oder 2,
**dadurch gekennzeichnet,**
**dass** das Radial- und Axiallager (20) als ein Vierpunktlager ausgebildet ist.

4. Rundtaktvorrichtung nach einem der Ansprüche 1 bis 3,
**dadurch gekennzeichnet,**
**dass** ein oberer Lagerring (22) des Radial- und Axiallagers (20) direkt oder über ein Zwischenelement an der Unterseite des Drehtisches (10) und ein unterer Lagerring (24) auf einem Grundelement (40) befestigt ist, welches mit dem Maschinenbett verbunden ist.

5. Rundtaktvorrichtung nach einem der Ansprüche 1 bis 4,
**dadurch gekennzeichnet,**
**dass** der Drehtisch (10) mittels eines Antriebes (30) drehend antreibbar ist, welcher vorzugsweise als ein Direktantrieb ausgebildet ist.

6. Rundtaktvorrichtung nach Anspruch 5,
**dadurch gekennzeichnet,**
**dass** der Antrieb (30) ein elektrischer Antrieb mit einem Rotor (32) und einem Stator (34) ist und
**dass** der Rotor (32) an dem Drehtisch (10) und der Stator (34) an dem Maschinenbett angeordnet ist.

7. Rundtaktvorrichtung nach Anspruch 5 oder 6,
**dadurch gekennzeichnet,**
**dass** der Antrieb (30) als ein Servomotor ausgebildet ist.

8. Rundtaktvorrichtung nach einem der Ansprüche 1 bis 7,
**dadurch gekennzeichnet,**
**dass** eine Steuerung vorgesehen ist, mit welcher der Drehtisch (10) taktweise drehbar ist.

9. Druckmaschine, insbesondere Siebdruckmaschine,
**dadurch gekennzeichnet,**
**dass** eine Rundtaktvorrichtung nach einem der Ansprüche 1 bis 8 vorgesehen ist.

10. Druckmaschine nach Anspruch 9,
**dadurch gekennzeichnet,**
**dass** an dem Drucktisch (10) sternförmig Paletten zum Halten eines Druckgutes angeordnet sind und
**dass** ein Druckteller mit einer Vielzahl von Druckstationen am Maschinenbett angeordnet ist.
